# EUROPEAN PATENT APPLICATION

(11) **EP 1 020 983 A2**
(43) Date of publication of application: **19.07.2000**
(21) Application number: 99310205.2
(22) Date of filing: 16.12.1999
(51) Int. Cl.: H02M 9/00

(54) **Power circuit**

(30) Priority: 16.12.1998 JP 35803298
(71) Applicant: Seiko Instruments Inc., Chiba-shi, Chiba (JP); Ryoden Trading Co., Ltd., Toyko (JP)
(72) Inventor: Shimoda, Sadashi, Seiko Instruments Inc., Chiba-shi, Chiba (JP)
(74) Representative: Kenyon, Sarah Elizabeth

(57) **Abstract**

In a domestic electrical appliance such as a television, a power must be continuously applied to an infrared ray receiving circuit and a microcomputer because the electrical appliance receives a remote control signal even if an image reception turns off. This is called "waiting-time consumed power." However, the efficiency of the AC-DC converter is low, and the power of about 1 W is consumed only for such a waiting-time consumed power. Under the existing environment issue, a demand is made to reduce the consumed power at the waiting time as much as possible, which cannot be achieved by the existing circuit structure at all.

Electricity is stored in electric charge storing means such as a secondary battery or an electric double layer capacitor so as to supply a power to the microcomputer and an infrared ray receiving circuit without always operating the AC-DC converter. Before a voltage across the electric charge storing means becomes lower than a given value, specifically, the lowest operating voltage of the microcomputer and the infrared ray receiving circuit, the AC-DC converter is operated to charge the electric charge storing means whereas before the voltage arises to the given voltage, specifically, the highest operating voltage of the microcomputer and the infrared ray receiving circuit, the AC-DC converter stops charging the electric charge storing means. With the above operation, the operating frequency of the AC-DC converter is reduced so that the power consumed by the AC-DC converter which is the worst in power efficiency is reduced, thereby making it possible to reduce the entire waiting-time consumed power.

## Description

### BACKGROUND OF THE INVENTION

The present invention relates to a power circuit for domestic electrical appliances having a remote control function, and more particularly to a power circuit which reduces a current consumed in the domestic electrical appliances during a waiting period of time.

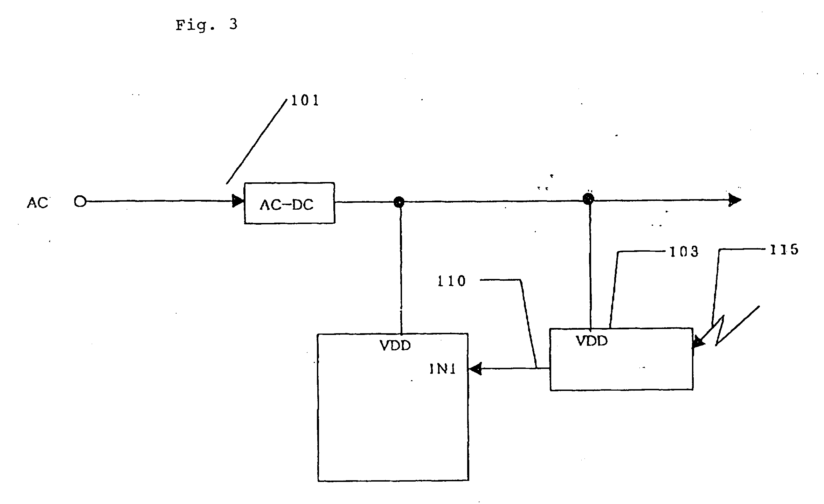

As a conventional power circuit for domestic electrical appliances having a remote control function, there has been known a power circuit using means for converting an a.c. voltage into a d.c. voltage (hereinafter referred to as "AC-DC converter") as shown in a circuit diagram of Fig. 3. That is, an output voltage of the AC-DC converter permits a control circuit for remote controllr, in this example, a microcomputer and an infrared ray receiving circuit to be driven.

### SUMMARY OF THE INVENTION

In the circuit of Fig. 3, in a domestic electrical appliance such as a television, a power must be continuously applied to the infrared ray receiving circuit and the microcomputer because the electrical appliance receives a remote control signal even if an image reception turns off. This is called "waiting-time consumed power". However, the efficiency of the AC-DC converter is low, and the power of about 1 W is consumed only for such a waiting-time consumed power. Under the existing environment issue, a demand is made to reduce the consumed power at the waiting time as much as possible, which cannot be achieved by the existing circuit structure at all.

In order to solve the above problem, electricity is stored in the electric charge storing means such as a secondary battery or an electric double layer capacitor so as to supply a power to the microcomputer and the infrared ray receiving circuit without always operating the AC-DC converter. Before a voltage across the electric charge storing means becomes lower than a given value, specifically, the lowest operating voltage of the microcomputer and the infrared ray receiving circuit, the AC-DC converter is operated to charge the electric charge storing means whereas before the voltage arises to the given voltage, specifically, the highest operating voltage of the microcomputer and the infrared ray receiving circuit, the AC-DC converter stops charging the electric charge storing means. with the above operation, the operating frequency of the AC-DC converter is reduced so that the power consumed by the AC-DC converter which is the worst in power efficiency is reduced, thereby making it possible to reduce the entire waiting-time consumed power.

### BRIEF DESCRIPITON OF THE DRAWINGS

Fig. 1 is an explanatory diagram showing a power circuit in accordance with Embodiment 1 of the present invention.

Fig. 2 is an explanatory diagram showing a power circuit in accordance with Embodiment 2 of the present invention.

Fig. 3 is an explanatory diagram showing a conventional power circuit.

### DESCRIPTION OF THE PREFERRED EMBODIMENTS

The present invention is directed to a structure in which a connection is made such that a power is supplied from electric charge storing means to an infrared ray receiving circuit and a microcomputer, a fluctuation of voltage across the electric charge storing means is detected by voltage detecting means, and an output signal from the voltage detecting means allows an AC-DC converter to operate.

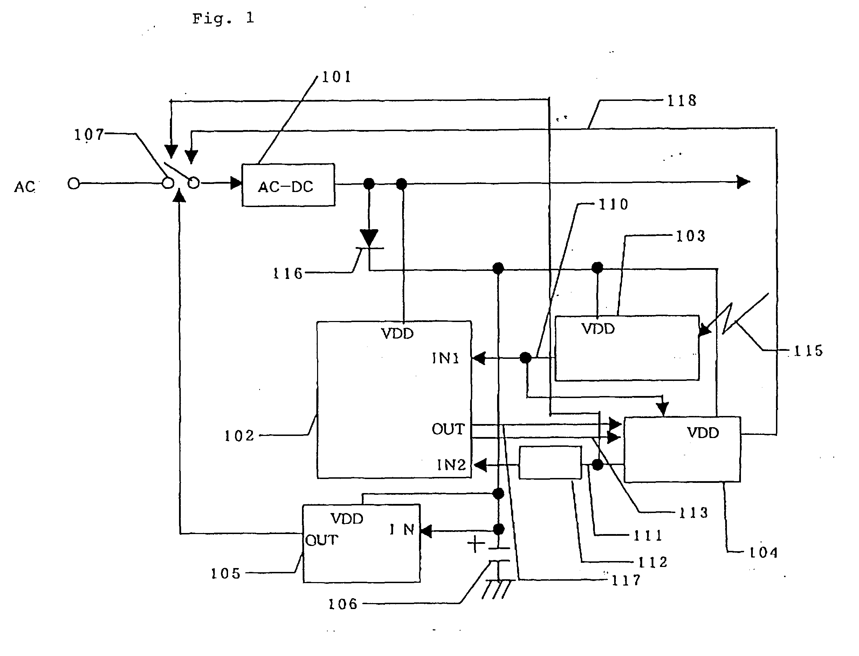

Fig. 1 is a diagram showing a power circuit in accordance with Embodiment 1 of the present invention. An AC input is connected with an AC-DC converter 101 through a switch 107, and an output of the AC-DC converter 101 is supplied to a positive power supply of a main microcomputer 102. The output of the AC-DC converter 101 is also supplied through a diode 116 to a sub-microcomputer 104, an infrared ray receiving circuit 103 and a positive power supply of electric charge storing means 106. The positive power supply is monitored in voltage by voltage detecting means 105 and an output of the voltage detecting means 105 is used for an open/close signal of the switch 107. The infrared ray receiving circuit 103 receives an infrared ray signal 115 from the external to output an output 110, and the output signal is inputted to the main microcomputer 102 and the sub-microcomputer 104. A signal 111 from the sub-microcomputer 104 is used to close the switch 107. The signal 111 is also inputted to the main microcomputer 102 through a delay circuit 112. Output signals 113 and 117 of the main microcomputer 102 are inputted to the sub-microcomputer 104. Also, a signal 118 used for opening the switch 107 is outputted from the sub-microcomputer 104.

Subsequently, the operation of the circuit shown in Fig. 1 will be described. when the AC-DC converter 101 suspends in a state where the switch 107 is opened, the main microcomputer 102 suspends because a power is not supplied to the main microcomputer 102. If the electric charge storing means 106 is lower than a given voltage, the voltage detecting means 105 outputs a signal which allows the switch 107 to be closed. As a result, the AC-DC converter 101 operates to charge the electric charge storing means 106. At the same time, since the power is also supplied to the infrared ray receiving circuit 103 and the sub-microcomputer 104, those circuits are operational. Thereafter, when the electric charge storing means 106 is charged up to the given voltage, the output of the voltage detecting means 105 is inverted to open the switch 107, to thereby stop the AD-DC converter. However, in this situation, since the power is supplied to the infrared ray receiving circuit 103 and the sub-microcomputer 104 from the electric charge storing means 106, the infrared ray receiving circuit 103 and the sub-microcomputer 104 continue to operate.

Now, when an infrared ray signal 115 corresponding to a command code representative of power on is inputted to the infrared ray receiving circuit 103 from a remote controller, the infrared ray receiving circuit 103 outputs the signal 110 to the sub-microcomputer 104. Because the sub-microcomputer 104 is operational, the signal 111 is outputted to the switch 107 to make the switch 107 close. In this situation, the AC-DC converter 101 starts to operate. A voltage developed by the AC-DC converter 101 brings the main microcomputer 102 to a state where it can start to operate. Actually, a signal resulting from delaying the signal 111 by the delay circuit 112 makes the main microcomputer 102 start to operate. The delay circuit is used to cancel the reset of the main microcomputer 102, after the AC-DC converter 101 is started and its output voltage sufficiently rises. In addition, the main microcomputer 102 may output the signal 117 to the sub-microcomputer 104 after starting so as to stop the operation of the sub-microcomputer 104 for the purpose of reducing the consumed current of the sub-microcomputer. In this event, because there is found such a fact that the main microcomputer 102 normally starts to operate, the power circuit is improved in reliability. However, in the case where the consumed current of the sub-microcomputer 104 is as small as it can be ignored, the sub-microcomputer 104 may not forcedly be suspended. After the main microcomputer 102 starts to operation, the infrared ray signal 115 is amplified and filtered by the infrared ray receiving circuit 103, and then processed by the main microcomputer 102 as the signal 110.

Subsequently, when the infrared ray signal 115 corresponding to a command code representative of power off is inputted to the infrared ray receiving circuit 103 from the remote controller, the infrared ray receiving circuit 103 outputs the signal 110 to the main microcomputer 102. The main microcomputer 102 outputs the signal 113 to the sub-microcomputer 104 to start the operation of the sub-microcomputer 104. After the sub-microcomputer 104 normally starts its operation, the sub-microcomputer 104 sends out the signal 118 to-the switch 107, to thereby open the switch 107. In this method, because there is found such a fact that the sub-microcomputer 104 normally starts to operate, the power circuit is improved in reliability. Then, because the AC-DC converter 101 suspends so that the power supply to the main microcomputer 102 is interrupted, the operation of the main microcomputer 102 also suspends with the result that the consumed power is reduced. The charges in the electric charge storing means 106 do not inversely flow to the main microcomputer 102 because of the diode 116.

According to the present invention, because the power is always supplied to the infrared ray receiving circuit 103 and the sub-microcomputer 104 from the electric charge storing means 106, the infrared ray signal 115 can be always receivable even in a state where the AC-DC converter 101 does not operate. In this state, because only the infrared ray receiving circuit 103, the sub-microcomputer 104 and the voltage detecting means 105 operate, the entire consumed current can be reduced. Because the main microcomputer 102 is normally operated with clocks of about 10 MHz, a current of about 50 mA is required. However, if the structure is made so that only the sub-microcomputer 104 operates, the consumed current can be reduced to about 100 A. Also, a total consumed current of the infrared ray receiving circuit and the voltage detecting means 105 is also reduced to about 100 A.

Also, the AC-DC converter 101 is operated only when the voltage across the electric charge storing means becomes lower than the given voltage. The intermittent operation of the AC-DC converter 101 makes it possible to further reduce the consumed power in the AC-DC converter 101. In this example, the above given voltage at which the AC-DC converter 101 operates is detected by the voltage detecting means 105, and the given voltage is a voltage close to the lowest operating voltage of the infrared ray receiving circuit 103 or the sub-microcomputer 104. On the other hand, in the case where the AC-DC converter 101 stops the operation after that, if the voltage across the electric charge storing means 106 rises due to charging and comes to a voltage close to the highest operating voltage of the infrared ray receiving circuit 103 or the sub-microcomputer 104, the given voltage is detected by inverting the output of the voltage detecting means 105. In other words, the detection of the given voltage is realized by providing the voltage detecting means 105 with hysteresis. Also, the voltage detection may be conducted by the sub-microcomputer if the sub-microcomputer 104 has an A/D converter.

According to the present invention, the switch is used as means for stopping the operation of the AC-DC converter. Alternatively, the AC-DC converter per se may be provided with an on/off function to realize the operation start/suspension of the AC/DC converter.

Also, the circuit pertaining to the infrared ray reception according to the present invention is generally supplied as a so-called module which results from mounting an IC circuit on a printed circuit board in a package state or in a bear chip state. This is called "infrared ray receiving module". The power circuit of the present invention is also applicable to the infrared ray receiving module. In other words, the control means, the infrared ray receiving means, the control means such as a sub-microcomputer or the main microcomputer, the voltage detecting means and the electric charge storing means are disposed on the same printed board, thereby making it possible to manufacture the infrared ray receiving module small in space. It is desirable that the respective means are disposed on the printed board if necessary because of the arrangement of other circuits.

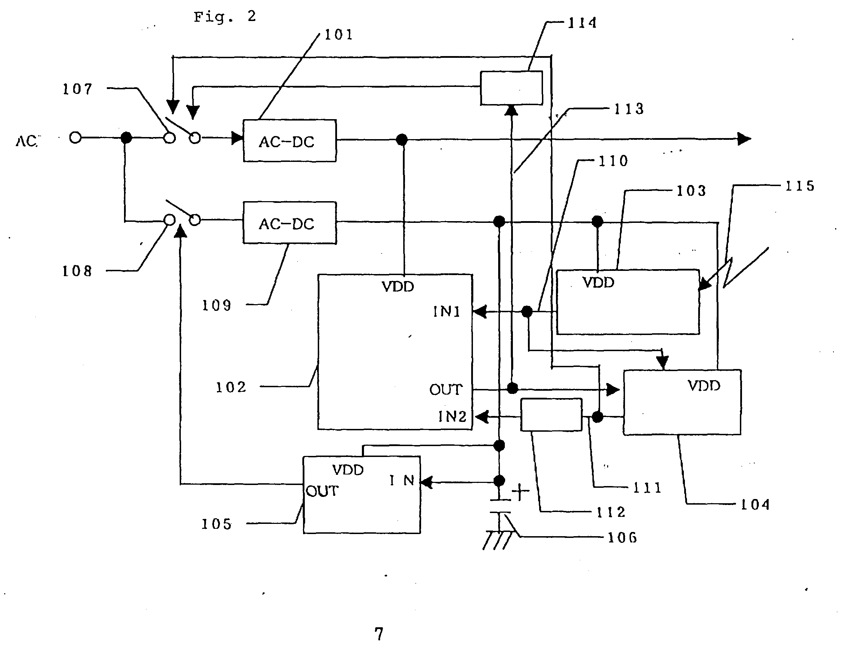

Fig. 2 is a diagram showing a power circuit in accordance with Embodiment 2 of the present invention. An AC input is connected with an AC-DC converter 101 through a switch 107, and an output of the AC-DC converter 101 is supplied to a positive power supply of a main microcomputer 102. The AC input is connected with an AC-DC converter 109 through a switch 108, and an output of the AC-DC converter 109 is supplied to a sub-microcomputer 104, an infrared ray receiving circuit 103 and a positive power supply of electric charge storing means 106. The electric charge storing means 106 is monitored by voltage detecting means 105, and an output of the voltage detecting means 105 is used as an open/close signal of the switch 108. The infrared ray receiving circuit 103 receives an infrared ray signal 115 from the external to output an output 110, and the output signal is inputted to the main microcomputer 102 and the sub-microcomputer 104. A signal 111 is outputted from the sub-microcomputer 104 to close the switch 107. The signal 111 is also inputted to the main microcomputer 102 through a delay circuit 112. An output signal 113 of the main microcomputer 102 is inputted to the sub-microcomputer 104 and also used for opening the switch 107 through a delay circuit 114.

Subsequently, the operation of the circuit shown in Fig. 2 will be described. When the AC-DC converter 101 suspends in a state where the switch 107 is opened, the main microcomputer 102 suspends because a power is not supplied to the main microcomputer 102. If the electric charge storing means 106 is lower than a given voltage, the voltage detecting means 105 outputs a signal which allows the switch 108 to be closed. As a result, the AC-DC converter 109 operates to charge the electric charge storing means 106. At the same time, since the power is also supplied to the infrared ray receiving circuit 103 and the sub-microcomputer 104, those circuits are operational. Thereafter, when the electric charge storing means is charged up to the given voltage, the output of the voltage detecting means 105 is inverted to open the switch 108, to thereby stop the AD-DC converter. However, in this situation, since the power is supplied to the infrared ray receiving circuit 103 and the sub-microcomputer 104 from the electric charge storing means 106, the infrared ray receiving circuit 103 and the sub-microcomputer 104 continue to operate.

Now, when an infrared ray signal 115 corresponding to a command code representative of power on is inputted to the infrared ray receiving circuit 103 from a remote controller, the infrared ray receiving circuit 103 outputs the signal 110 to the sub-microcomputer 104. Because the sub-microcomputer 104 is operational, the signal 111 is outputted to the switch 107 to make the switch 107 close. In this situation, the AC-DC converter 101 starts to operate. A voltage developed by the AC-DC converter 101 brings the main microcomputer 102 to a state where it can start to operate. Actually, a signal resulting from delaying the signal 111 by the delay circuit 112 makes the main microcomputer 102 start to operate. Program may be designed in such a manner that the sub-microcomputer 104 stops the operation after it outputs the signal 111, to thereby reduce the consumed power. After the main microcomputer 102 starts it operationtion, the infrared ray signal 115 is amplified and filtered by the infrared ray receiving circuit 103, and then processed by the main microcomputer 102 as the signal 110.

Subsequently, when the infrared ray signal 115 corresponding to a command code representative of power off is inputted to the infrared ray receiving'circuit 103 from the remote controller, the infrared ray receiving circuit 103 outputs the signal 110 to the main microcomputer 102. The main microcomputer 102 outputs the signal 113 to the sub-microcomputer 104 to start the operation of the sub-microcomputer 104. At the same time, the signal 113 is delayed by the delay circuit 114 and so used as to open the switch 107. As a result, because the AC-DC converter 101 suspends so that the power supply to the main microcomputer 102 is interrupted, the operation of the main microcomputer 102 also suspends to reduce the consumed power.

According to the present invention, because the power is always supplied to the infrared ray receiving circuit 103 and the sub-microcomputer 104 from the electric charge storing means 106, the infrared ray signal 115 can be always receivable even in a state where the AC-DC converters 101 and 109 do not operate. In this state, because only the infrared ray receiving circuit 103, the sub-microcomputer 104 and the voltage detecting means 105 operate, the entire consumed current can be reduced. Because the main microcomputer 102 is normally operated with clocks of about 10 MHz, a current of about 50 mA is required. However, if the structure is made so that only the sub-microcomputer 104 operates, the consumed current can be reduced to about 100 A. Also, a total consumed current of the infrared ray receiving circuit and the voltage detecting means 105 is also reduced to about 100 A. The reason why the AC-DC converter is divided into converters 101 and 109 is that although the load current of the AC-DC converter 101 is the order of several tens A because it is used to operate the main circuit, the load current of the AC-DC converter 109 is the order of several hundreds A which is low in load because it is used to operate only the infrared ray receiving circuit 103, the sub-microcomputer 104 and the voltage detecting means 105. Accordingly, because those AC-DC converters 101 and 109 are greatly different in the order of load current from each other, if they are structured by one AC-DC converter, the efficiency at a low load is deteriorated. As a result, not only the consumed current of the infrared ray receiving circuit 103, the sub-microcomputer 104 and the voltage detecting means 105 but also the consumed current of the AC-DC converter dominates, resulting in a factor that prevents the reduction of consumed current. For the above reason, this embodiment employs two AC-DC converters.

Also, the AC-DC converter 109 is operated only when the voltage across the electric charge storing means becomes lower than the given voltage. The intermittent operation of the AC-DC converter 109 makes it possible to further reduce the consumed power in the AC-DC converter 109. In this example, the above given voltage at which the AC-DC converter 109 operates is detected by the voltage detecting means 105, and the given voltage is a voltage close to the lowest operating voltage of the infrared ray receiving circuit 103 or the sub-microcomputer 104. On the other hand, in the case where the AC-DC converter 109 stops the operation after that, if the voltage across the electric charge storing means rises due to charging and comes to a voltage close to the highest operating voltage of the infrared ray receiving circuit or the sub-microcomputer, the given voltage is detected by inverting the output of the voltage detecting means 105. In other words, the detection of the given voltage is realized by providing the voltage detecting means 105 with hysteresis. Also, the voltage detection may be conducted by the sub-microcomputer if the sub-microcomputer 104 has an A/D converter.

According to the present invention, the switch is used as means for suspending the operation of the AC-DC converter. Alternatively, the AC-DC converter per se may be provided with an on/off function to realize the operation start/suspension of the AC/DC converter.

The present invention has the following advantages. That is, electricity is stored in the electric charge storing means such as a secondary battery or an electric double layer capacitor so as to supply a power to the microcomputer and the infrared ray receiving circuit without always operating the AC-DC converter. With the above operation, the operating frequency of the AC-DC converter is reduced so that the power consumed by the AC-DC converter which is the worst in power efficiency is reduced, thereby making it possible to reduce the entire waiting-time consumed power. Also, if the power circuit of the present invention is also applicable to the infrared ray receiving module, the control means, the infrared ray receiving means, the control means such as a sub-microcomputer and the main microcomputer, the voltage detecting means and the electric charge storing means are disposed on the same printed board, thereby making it possible to manufacture the infrared ray receiving module small in space.

## Claims

1. A power circuit, characterized by comprising: means for converting an a.c. voltage into a d.c. voltage; electric charge storing means; voltage detecting means; control means; and infrared ray receiving means.

2. The power circuit as claimed in claim 1, characterized in that said control means and said infrared ray receiving means are disposed on,the same printed board, and if necessary, said electric charge storing means and said voltage detecting means are also disposed on said printed board.

3. A power circuit, characterized in that voltage detecting means monitors a voltage between both ends of electric charge storing means, and means for converting an a.c. voltage into a d.c. voltage charges said electric charge storing means if the voltage between both ends of said electric charge storing means becomes lower than a given voltage and stops the charging operation if the voltage becomes equal to or more than the given voltage.

4. A power circuit characterized in that voltage detecting means, control means and infrared ray receiving means are supplied with a supply voltage from electric charge storing means.

5. A power circuit characterized in that control means comprises a sub-microcomputer or a logic circuit having the same function as that of the sub-microcomputer, and said control circuit starts the operation of a main microcomputer disposed separately.

6. A power circuit characterized in that an output signal of an infrared ray receiving means is supplied to both of a main microcomputer and a sub-microcomputer, and said sub-microcomputer starts the operation of said main microcomputer and thereafter stops the operation of said sub-microcomputer per se when said infrared ray receiving means receives a signal 1 which allows means for converting an a.c. voltage into a d.c. voltage to start and outputs the received signal 1 to said sub-microcomputer, whereas said main microcomputer starts the operation of said sub-microcomputer and thereafter stops the operation of said main microcomputer per se when said infrared ray receiving means receives a signal 2 which allows said means for converting an a.c. voltage into a d.c. voltage to stop and outputs the received signal 2 to said main microcomputer.

7. A power circuit characterized in that there is provided exclusive converting means for converting an a.c. voltage into a d.c. voltage in order to charge electric charge storing means.
